# EUROPÄISCHE PATENTSCHRIFT

(11) **EP 2 537 677 B1**
(45) Veröffentlichungstag und Bekanntmachung des Hinweises auf die Patenterteilung: **16.04.2014**
(21) Anmeldenummer: 12166640.8
(22) Anmeldetag: 03.05.2012
(51) Int. Cl.: B41F 33/00, B41F 33/14, G06K 9/32

(54) **Bahnbeobachtungssystem für Rotationsdruckmaschinen**
Sheet observation system for rotary printing press
Système d'observation de bande pour des presses rotatives

(30) Priorität: 22.06.2011 DE 202011050535 U
(43) Veröffentlichungstag der Anmeldung: 26.12.2012
(73) Patentinhaber: eltromat GmbH, 33818 Leopoldshöhe (DE)
(72) Erfinder: Schönfeld, Volker, 33332 Gütersloh (DE); Völlmecke, Dirk, 33415 Verl (DE)
(74) Vertreter: Ter Meer Steinmeister & Partner

(56) Entgegenhaltungen:
- EP-A1- 0 860 276
- JP-A- 2006 082 501
- US-A1- 2008 297 861

## Beschreibung

Die Erfindung betrifft ein Bahnbeobachtungssystem für Rotationsdruckmaschinen, mit einer Kamera, die in Querrichtung über eine in der Druckmaschine bedruckte Bahn bewegbar ist und durch eine Steuereinrichtung derart steuerbar ist, dass sie bei laufender Produktion, synchron mit dem Repeat des Druckbildes einen Ausschnitt des Druckbildes aufnimmt, und mit einem Bildschirm zur Wiedergabe des von der Kamera aufgenommenen Ausschnitts des Druckbildes bei laufender Produktion.

Für die Druckindustrie sind Bahnbeobachtungssysteme bekannt, mit denen bei laufender Produktion ein ausgewählter Ausschnitt des auf die Bahn gedruckten Bildes beobachtet werden kann. Durch die Synchronisation der Kamera mit dem Repeat des Druckbildes wird erreicht, dass dem Maschinenführer auf einem Monitor ein stehendes Bild angezeigt werden kann, das den gewählten Ausschnitt des Druckbildes wiedergibt. Wenn sich bei der Beobachtung dieses Ausschnittes zeigt, dass das Druckbild gewisse Fehler aufweist, beispielsweise Passerfehler, so kann der Maschinenführer die entsprechenden Einstellungen der Druckmaschine, beispielsweise das Seitenregister oder das Längsregister einzelner Farbwerke nachjustieren, um diese Fehler zu korrigieren. In entsprechender Weise können zur Behebung anderer Arten von Fehlern auch andere Einstellparameter der Druckmaschine nachjustiert werden, beispielsweise die Druckbeistellung (die Kraft, mit der die Klischeewalzen der verschiedenen Farbdecks gegen den Bedruckstoff angedrückt wird).

Aus US 2008/297861 A1 ist ein Bildverarbeitungsgerät mit einer Kombination aus einer räumlich auflösenden Kamera und einem Spektrometer zu Analyse eine Farbkontrollstreifens auf eine gedruckten Bild bekannt.

Ein ähnliches Farbmessgerät wird auch in JP 2006 082501 A beschrieben.

EP 0 860 276 A1 beschreibt ein Farbmessgerät mit quer über die Bedruckstoffbahn bewegbaren Messköpfen.

EP-A-2 269 824 beschreibt ein Bahnbeobachtungssystem nach dem Oberbegriff von Anspruch 1.

Aufgabe der Erfindung ist es, ein Bahnbeobachtungssystem zu schaffen, das eine bessere Überwachung der Farbqualität des Druckbildes erlaubt.

Diese Aufgabe wird erfindungsgemäß gelöst durch ein mit der Kamera mitbewegbares, auf die Bahn gerichtetes Spektrometer.

Mit Hilfe des Spektrometers kann in einem ausgewählten Analysefeld die Farbqualität des gedruckten Bildes mit hoher spektraler Auflösung aufgezeichnet und überwacht werden. Da das Spektrometer oder zumindest der lichtempfangende Teil dieses Spektrometers mitbewegbar an der Kamera angeordnet ist, kann die Kamera zur Auswahl des Analysefeldes in dem gedruckten Bild sowie auch zur Lagekontrolle des Analysefeldes benutzt werden. So lässt sich das Analysefeld gezielt auf kritische Punkte in dem gedruckten Bild ausrichten, für die eine besonders hohe Farbtreue der Wiedergabe verlangt wird. Erforderlichenfalls kann der für die Spektralanalyse ausgewählte Teil des gedruckten Bildes auch bei laufender Produktion verändert werden, so dass sich die Farbqualität in einer im Prinzip unbegrenzten Anzahl verschiedener, insbesondere auch verschiedenfarbiger Bereiche des gedruckten Bildes analysieren lässt. Wenn sich dabei zeigt, dass die spektrale Zusammensetzung signifikant von dem Sollwert für den betreffenden Bildbereich abweicht, kann der Druckvorgang abgebrochen werden oder bei laufender Druckmaschine die für die Farbzusammensetzung maßgeblichen Parameter nachjustiert werden.

Vorteilhafte Ausgestaltungen der Erfindung sind in den Unteransprüchen angegeben.

Bevorzugt ist zur Ausleuchtung des Analysefeldes für das Spektrometer eine Blitzlichtquelle vorgesehen. Das ermöglicht zum einen eine hohe Lichtintensität, wie sie für ein Spektrometer benötigt wird, und ermöglicht es darüber hinaus, den Zeitpunkt und die Dauer des Datensamplings im Spektrometer über die Belichtung präzise zu steuern.

Vorzugsweise ist auch der Kamera eine Blitzlichtquelle zugeordnet. Die Blitzlichtquellen für die Kamera und das Spektrometer werden synchron angesteuert, so dass sie ihre Blitzlichtpulse simultan abgeben. Dadurch ist sichergestellt, dass die Position des Analysefeldes in Laufrichtung der Bedruckstoffbahn stets eine konstante Position relativ zu dem von der Kamera aufgenommenen Bildausschnitt hat.

Wenn das sensitive Feld des Spektrometers, das das Analysefeld auf der Bedruckstoffbahn definiert, innerhalb des Sichtfeldes der Kamera liegt, so kann die Position des Analysefeldes unmittelbar in dem auf dem Bildschirm angezeigten Bild der Bahnbeobachtungskamera markiert werden, entweder durch eine synthetisch erzeugte Markierung oder mit Hilfe eines oder mehrerer Lichtflecke, die mit Hilfe eines Laserpointers oder dergleichen auf die Bahn projiziert werden.

Wenn das sensitive Feld des Spektrometers außerhalb des Sichtfeldes der Kamera liegt, kann die Lage des Analysefeldes gleichwohl mit Hilfe der Kamera kontrolliert werden, nämlich durch Beobachtung eines Referenzbildes, das eine feste räumliche Beziehung zu dem Analysefeld hat.

Im folgenden werden Ausführungsbeispiele anhand der Zeichnung näher erläutert.

Es zeigen:
- Fig. 1: eine schematische Darstellung eines erfindungsgemäßen Bahnbeobachtungssystems;
- Fig. 2: eine Prinzipskizze eines Spektrometers in dem Bahnbeobachtungssystem nach Fig. 1;
- Fig. 3: ein Beispiel für die Auswahl eines Analysefeldes für das Spektrometer gemäß einer Ausführungsform der Erfindung;
- Fig. 4: ein Beispiel für die Auswahl des Analysefeldes gemäß einer anderen Ausführungsform der Erfindung; und
- Fig. 5: ein Zeitdiagramm zur Erläuterung der Ansteuerung des Spektrometers und einer Kamera bei der Auswahl des Analysefeldes mit der Ausführungsform gemäß Fig. 4.

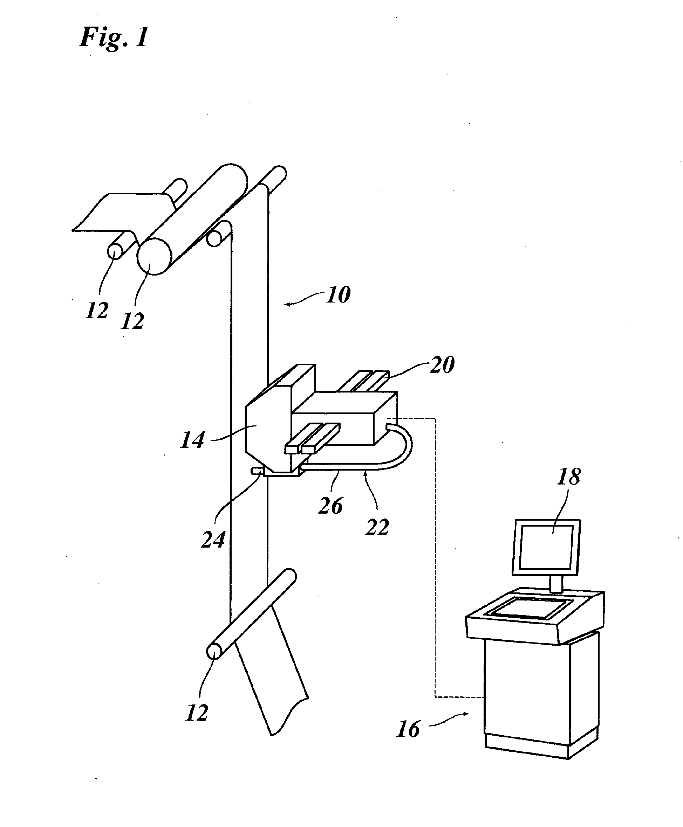

In Fig. 1 ist ein Abschnitt einer Bahn 10 gezeigt, die in einer Rotationsdruckmaschine bedruckt worden ist und über verschiedene Umlenk- und Führungsrollen 12 zu einer nicht gezeigten Aufwicklung weitergeleitet wird. An der Bahn 10 ist eine Kamera 14, beispielsweise eine Matrixkamera installiert, die dazu eingerichtet ist, einen rechteckigen Ausschnitt des auf die Bahn 10 gedruckten Bildes zu fotografieren. Eine zugehörige Blitzlicht-Beleuchtungseinrichtung ist direkt in die Kamera integriert. Die Kamera 14 ist mit einem leistungsfähigen elektronischen Datenverarbeitungssystem in einem Steuerpult 16 der Vorrichtung verbunden.

Die Bahn 10 wird in der Rotationsdruckmaschine mit einem Bild bedruckt, das sich in gewissen Intervallen (dem Repeat) wiederholt, nämlich mindestens nach jeder vollständigen Umdrehung der Druckwalzen. Die Kamera 14 ist nach den Stroboskop-Prinzip so mit im Repeat synchronisiert, das bei jedem digitalen Einzelfoto, das die Kamera aufnimmt, derselbe Bildausschnitt fotografiert wird, so dass man am Steuerpult 16 auf einem Bildschirm 18, auf dem die nacheinander aufgenommenen Bilder wiedergegeben werden, ein stehendes Bild erhält.

Die Kamera 14 ist auf Schienen 20 in Querrichtung der Bahn 10 verfahrbar, so dass die Querposition des fotografierten Bildausschnittes variiert werden kann. Durch Änderung der Phasenlage der Bildsequenz relativ zum Repeat lässt sich auch die Längsposition des Bildausschnittes variieren.

Die Kamera 14 ist Kernstück eines Bahnbeobachtungssystems, das dazu dient, das Ergebnis des Druckprozesses bei laufender Produktion stichprobenartig zu überwachen, so dass der Maschinenführer jederzeit eingreifen kann, um etwa auftretende Fehler wie Passerfehler, Farbtonveränderungen und dergleichen zu korrigieren.

Die Besonderheit des hier beschriebenen Bahnbeobachtungssystems besteht darin, dass die Kamera 14 mit einem Spektrometer 22 kombiniert ist, das an der Bewegung der Kamera 14 in Längsrichtung der Schienen 20, also quer zur Bahn 10 teilnimmt. Ein Objektiv 24 des Spektrometers ist außenseitig am Gehäuse der Kamera 14 angebracht, im gezeigten Beispiel an der Unterseite, und auf die Bahn 10 gerichtet, so dass das Spektrum eines räumlich eng begrenzten Analysefleckes auf der Bahn aufgenommen werden kann. Eine nicht gezeigte Abschirmung schützt das Objektiv 24 vor Fremdlicht sowie vor Störeinflüssen durch das zur Kamera 14 gehörende Belichtungssystem. Das Objektiv 24 ist über ein Lichtleiterkabel 26 mit weiteren Komponenten des Spektrometers verbunden, die im Gehäuse der Kamera 14 untergebracht sind und deshalb in Fig. 1 nicht sichtbar sind.

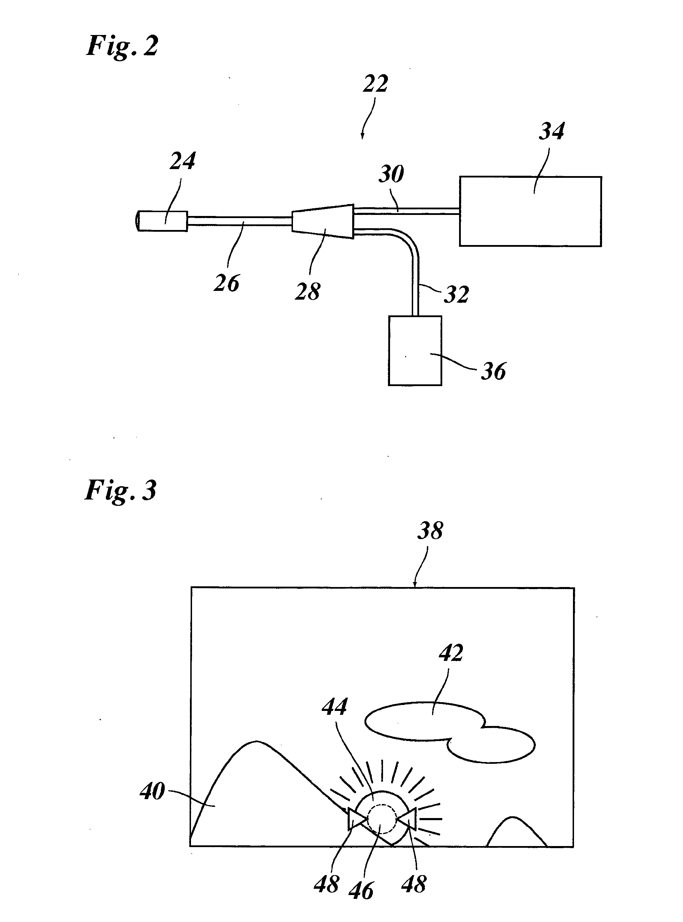

Der prinzipielle Aufbau des Spektrometers 22 ist in Fig. 2 gezeigt. Das Lichtleichterkabel 26 wird durch ein Bündel aus einer Vielzahl von optischen Fasern gebildet und verbindet das Objektiv 24 mit einer Weiche 28, in der das Faserbündel in zwei Stränge 30, 32 aufgeteilt wird. Der Strang 30 führt zu einer Blitzlichtquelle 34, beispielsweise einer Kurzbogenblitzlampe, während der Strang 32 zu einem Analyseteil 36 des Spektrometers führt. Das Licht der Blitzlichtquelle 34 gelangt über den Strang 30 und das Lichtleiterkabel 26 zu dem Objektiv 24 und wird durch dessen Optik auf einen relativ kleinen Fleck, den sogenannten Analysefleck, auf der Bahn 10 fokussiert, vorzugsweise so, das dabei ein Standard-Einfallswinkel eingehalten wird. Das von dem Analysefleck zurückgestreute Licht wird von der Optik des Objektivs 24 empfangen und über die zu dem Strang 32 gehörenden Fasern des Lichtleiterkabels 26 zu dem Analyseteil 36 geleitet, wo das Licht in bekannter Weise in ein Spektrum zerlegt und das Spektrum mit Hilfe optoelektronischer Elemente aufgenommen wird. Das so erhaltene Spektrum kann dann an das Steuerpult 16 übermittelt und dort in geeigneter Form auf dem Bildschirm 18 angezeigt werden.

Durch Steuerung der Bewegung der Kamera 14 kann die Lage des Analyseflecks in Querrichtung der Bahn 10 eingestellt werden. Die Einstellung der Lage des Analyseflecks in Laufrichtung der Bahn 10 erfolgt durch Zeitsteuerung der Blitzlichtquelle 34, deren Blitz das Spektrometer triggert. Auf diese Weise kann jeder gewünschte Punkt des auf die Bahn gedruckten Bildes für eine detaillierte Spektralanalyse mit Hilfe des Spektrometers 22 ausgewählt werden.

In einer Ausführungsform ist das Objektiv 24 des Spektrometers so an der Kamera 14 angeordnet, dass der von dem Objektiv 24 beobachtete Analysefleck innerhalb des Sichtfeldes der Kamera 14 liegt. Für diese Ausführungsform soll die Vorgehensweise bei der Wahl der Lage des Analyseflecks anhand von Fig. 3 erläutert werden.

Fig. 3 zeigt ein Beispiel für ein auf die Bahn 10 gedrucktes Bild 38, in diesem Fall ein Landschaftsbild mit Bergen 40, Wolken 42 und einer aufgehenden Sonne 44. Es soll angenommen werden, dass das Gelb der Sonne 44 einer genaueren Spektralanalyse unterzogen werden soll. Ein Analysefleck 46, also ein Bereich auf der Bahn 10, für den das Objektiv des Spektrometers 22 sensitiv ist, ist in Fig. 3 gestrichelt eingezeichnet und wird für den Beobachter durch optische Markierungen 48 sichtbar gemacht. Da das Objektiv 24 de Spektrometers mittig unter der Kamera 14 angebracht ist, liegt der Analysefleck 46 in horizontaler Richtung in Fig. 3 in der Mitte des Bildes 38. Die vertikale Position des Analyseflecks 46 ist durch die vertikale Position und Neigung des Objektivs 24 bestimmt.

Das Bild 38 wird von der Kamera 14 während des Stroboskop-Blitzes der zu der Kamera gehörenden Belichtungseinrichtung aufgenommen. Gleichzeitig mit diesem Stroboskop-Blitz wird auch mit der Blitzlichtquelle 34 des Spektrometers ein Blitz erzeugt, so dass das Spektrum des Analyseflecks 46 in dem Augenblick aufgenommen wird, in dem sich der Zielpunkt, hier also das Zentrum der Sonne 44, im sensitiven Feld des Spektrometers befindet.

Die optischen Markierungen 48 können synthetisch in das Bild 38 eingeblendet werden. In einer modifizierten Ausführungsform sind dem Objektiv 24 des Spektrometers ein oder mehrere Lichtzeiger (Laserpointer) zugeordnet, mit denen Lichtflecke, beispielsweise in der Form der dreieckigen Markierungen 48, auf die Bahn 10 projiziert werden. In dem in Fig. 3 gezeigten Beispiel liegen diese Lichtflecke, also die Markierungen 38, außerhalb des Analyseflecks 46, so dass das Spektrum nicht durch das Licht der Laserpointer verfälscht wird.

In einer anderen Ausführungsform ist das Objektiv 24 des Spektrometers so angeordnet, dass der Analysefleck 46 außerhalb des Gesichtsfeldes der Kamera 14 liegt.

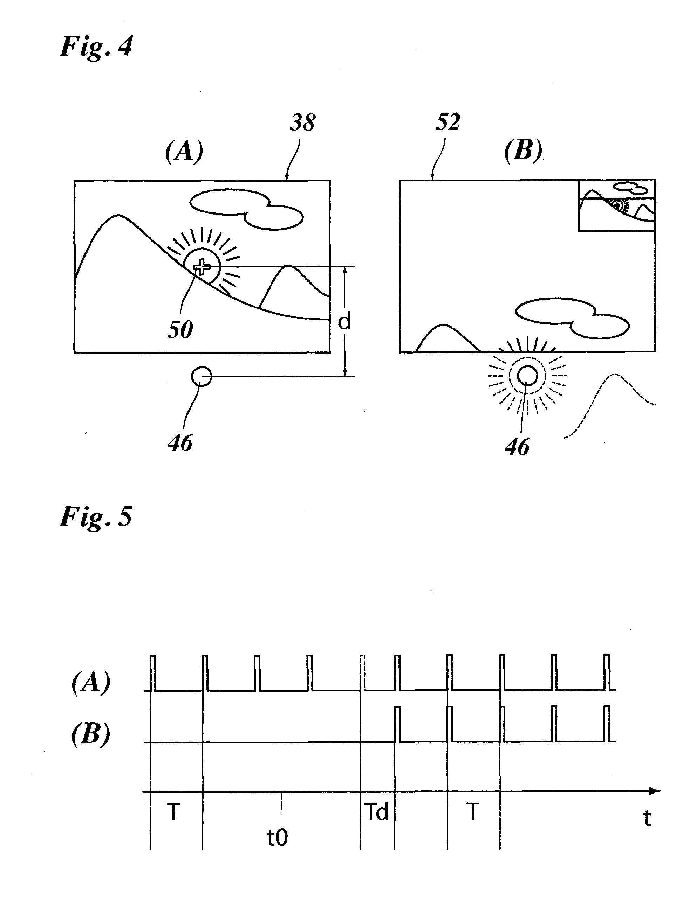

Diese Situation ist in Fig. 4(A) veranschaulicht, wo der Analysefleck 46 außerhalb (unterhalb) des Bildes 38 liegt. Für die Auswahl der Lage des Analyseflecks relativ zu den auf die Bahn 10 gedruckten Formaten wird in diesem Fall zunächst eine Zielmarke 50 in das Bild 38 eingeblendet, beispielsweise genau in die Mitte des Bildes. In Laufrichtung der Bahn 10, also in vertikaler Richtung in Fig. 4(A), hat diese Zielmarke einen definierten und genau bekannten Abstand d zu dem tatsächlichen Analysefleck 46, also dem vom Objektiv 24 beobachteten Gebiet.

Durch Bewegung der Kamera 14 längs der Schienen 20 und durch Ändern der Phasenlage der Stroboskop-Blitze der Kamera wird das Bild 38 so verschoben, dass die Zielmarke 50 auf die gewünschte Position des Analyseflecks 46 ausgerichtet wird. Der Benutzer gibt dann den Befehl, dass diese Position für den Analysefleck ausgewählt werden soll. Daraufhin wird die Blitzlichtquelle 34 des Spektrometers so angesteuert, dass sie einen ersten Blitz zu einem Zeitpunkt aufnimmt, der gegenüber dem Takt der Kamera 14 so verzögert ist, dass die Bahn 10 innerhalb dieser Verzögerungszeit gerade die Distanz d zurücklegt.

Gleichzeitig wird die Phase der Blitze der Kamera 14 so verschoben, dass die Kamerablitze wieder gleichzeitig mit den Blitzen des Spektrometers auftreten. Die Folge ist, dass sich der von der Kamera aufgenommene Bildausschnitt verschiebt und man auf dem Bildschirm nun ein Referenzbild 52 sieht, das in Fig. 4(B) dargestellt ist. Der Analysefleck 46 liegt außerhalb dieses Referenzbildes, hat jedoch zu dem Referenzbild nach wie vor eine feste räumliche Beziehung, so dass anhand des Referenzbildes 52 überprüft werden kann, ob sich der Analysefleck noch in der gewünschten Position befindet. Wenn beispielsweise aufgrund einer Störung die Synchronisation des Spektrometers mit dem Repeat des gedruckten Bildes instabil wird, so ist dies an ein einem "Wackeln" oder Auswandern des Referenzbildes 52 zu erkennen.

In dem in Fig. 4(B) gezeigten Beispiel ist zur zusätzlichen Kontrolle eine verkleinerte Version des Bildes 38, das unmittelbar vor der Auswahl des Analysefleckes aufgenommen wurde, rechts oben in das Referenzbild 52 eingeblendet. Die Lage des unteren Randes des Referenzbildes 52 ist in dem verkleinerten Bild ebenfalls angegeben, so dass sich auf einen Blick erfassen lässt, welcher Bereich des Bildes für den Analysefleck 46 ausgewählt wurde und wie das zugehörige Referenzbild aussehen sollte.

Der oben geschilderte Ablauf ist in Fig. 5 in einem Zeitdiagramm dargestellt. Fig. 5(A) zeigt den Takt der Blitzimpulse der Kamera 14, und Fig. 5(B) zeigt die Blitzimpulse der Blitzbelichtungseinrichtung 34 des Spektrometers. Während der Auswahl des Analyseflecks ist das Spektrometer inaktiv, und die Blitzimpulse der Kamera 14 erzeugen das Bild 38 gemäß Fig. 4(A). Die Periode T dieser Impulse entspricht dabei dem Repeat des Druckbildes. Wenn die Zielmarke 50 auf die gewünschte Position ausgerichtet ist, wird zum Zeitpunkt t₀ der Analysefleck 46 gewählt. Darauf erzeugt die Blitzlichtquelle 34 des Spektrometers einen ersten Impuls, der gegenüber dem Takt der Blitzimpulse der Kamera um die Verzögerungszeit Td verzögert ist. Gleichzeitig werden die Blitzimpulse der Kamera 14 um die gleiche Verzögerungszeit verzögert, so dass das Spektrometer und die Kamera jeweils gleichzeitig blitzen, wiederum mit der Periode T. Bei jedem Blitz des Spektrometers wird ein Spektrum des Analyseflecks 46 aufgenommen, während gleichzeitig auf dem Bildschirm des Referenzbild 52 angezeigt wird.

Lediglich zu Illustrationszwecken ist hier angenommen worden, dass das Spektrometer jeweils nach Ablauf der Periode T einen neuen Blitz erzeugt und somit ein neues Spektrum aufnimmt. Dies ist jedoch nicht zwingend. Zwischen den einzelnen Messungen des Spektrometers können beliebig lange Pausen liegen. Wesentlich ist lediglich, dass die Messungen synchron mit den Blitzen der Kamera 14 während der Aufnahme des Referenzbildes 52 erfolgen. Es ist auch denkbar, dass die Aufnahme eines vollständigen Spektrums über mehrere Blitz-Takte des Spektrometers verteilt erfolgt, also das Spektrum zur Vermeidung von statistischen Schwankungen über eine Vielzahl von Blitz-Takten gesampelt wird.

## Patentansprüche

1. Bahnbeobachtungssystem für Rotationsdruckmaschinen, mit einer Kamera (14), die in Querrichtung über eine in der Druckmaschine bedruckte Bahn (10) bewegbar ist und durch eine Steuereinrichtung (16) derart steuerbar ist, dass sie bei laufender Produktion, synchron mit dem Repeat des Druckbildes, einen Ausschnitt des Druckbildes aufnimmt, und mit einem Bildschirm (18) zur Wiedergabe des von der Kamera (14) aufgenommenen Ausschnitts des Druckbildes bei laufender Produktion, **gekennzeichnet durch** ein mit der Kamera mitbewegbares, auf die Bahn (10) gerichtetes Spektrometer (22).

2. Bahnbeobachtungssystem nach Anspruch 1, mit einer Blitzlichtquelle (34) für das Spektrometer (24).

3. Bahnbeobachtungssystem nach Anspruch 2, bei dem das Spektrometer ein Objektiv (24) aufweist, das über optische Fasern (26, 30, 32) mit der Blitzlichtquelle (34) und einem Analyseteil (36) verbunden ist.

4. Bahnbeobachtungssystem nach Anspruch 2 oder 3, bei dem das Spektrometer (22) durch die Blitze der Blitzlichtquelle (34) getriggert ist.

5. Bahnbeobachtungssystem nach Anspruch 4, bei der der Kamera (14) eine weitere Blitzlichtquelle zugeordnet ist und die Steuereinrichtung (16) dazu ausgebildet ist, beide Blitzlichtquellen mit gleicher Frequenz und fester Phasenlage zu aktivieren.

6. Bahnbeobachtungssystem nach Anspruch 5, bei der die Steuereinrichtung (16) dazu ausgebildet ist, beide Blitzlichtquellen derart synchron zu aktivieren, dass sie jeweils gleichzeitig Blitze erzeugen.

7. Bahnbeobachtungssystem nach einem der vorstehenden Ansprüche, bei dem ein Analysefleck (46) auf der Bahn (10), für den das Spektrometer (22) sensitiv ist, innerhalb des Gesichtsfeldes der Kamera (14) liegt.

8. Bahnbeobachtungssystem nach Anspruch 5 oder 6, bei dem ein Analysefleck (46) auf der Bahn (10), für den das Spektrometer (22) sensitiv ist, in Laufrichtung der Bahn (10) um eine vorgegebene Distanz (d) gegenüber dem Gesichtsfeld der Kamera (14) versetzt ist.

9. Bahnbeobachtungssystem nach den Ansprüchen 6 und 8, bei dem die Steuereinrichtung (16) dazu ausgebildet ist, nach der Auswahl der Position des Analyseflecks (46) auf dem gedruckten Bild den Takt der Blitze der Kamera (14) um eine Verzögerungszeit (T_{d}) zu verzögern, die der Zeit entspricht, in der sich die Bahn (10) um die vorgegebene Distanz (d) weiter bewegt.

10. Bahnbeobachtungssystem nach einem der vorstehenden Ansprüche, bei dem die Steuereinrichtung (16) dazu ausgebildet ist, eine Zielmarke (50), die die Position eines Analyseflecks (46) für das Spektrometer angibt, in das von der Kamera (14) aufgenommene Bild einzublenden.

11. Bahnbeobachtungssystem nach Anspruch 7, mit einer Lichtquelle, die eine die Position eines Analyseflecks (46) relativ zu dem gedruckten Bild (38) angebende Markierung (48) auf die Bahn projiziert.

## Claims

1. Web monitoring system for rotary printing machines, comprising a camera (14) that is movable in transverse direction across a web (10) that is being printed on in the printing machine, said camera being adapted to be controlled by a control system (16) such that it records, during the running production process, an excerpt of the printed image in synchronism with the repeat of the printed image, and a monitor screen (18) for displaying the excerpt of the printed image as captured by the camera (14) during running production, **characterized by** a spectrometer (22) that is moved together with the camera and directed towards the web (10).

2. Web monitoring system according to claim 1, comprising a flash light source (34) for the spectrometer (22).

3. Web monitoring system according to claim 2, wherein the spectrometer has an objective (24) that is connected to the flash light source (34) and to an analysis section (36) via optical fibres (26, 30, 32).

4. Web monitoring system according to claim 2 or 3, wherein the spectrometer (22) is triggered by flashes from the flash light source (34).

5. Web monitoring system according to claim 4, wherein another flash light source is associated with the camera (14), and the control system (16) is adapted to activate both flash light sources with equal frequency and in fixed phase relation.

6. Web monitoring system according to claim 5, wherein the control system (16) is adapted to activate both flash light sources in synchronism such that they respectively generate simultaneous flashes.

7. Web monitoring system according to any of the preceding claims, wherein an analysis spot (46) on the web (10), for which the spectrometer (22) is sensitive, is arranged within the field of view of the camera (14).

8. Web monitoring system according to claim 5 or 6, wherein an analysis spot (46) on the web (10), for which the spectrometer (20) is sensitive, is offset relative to the field of view of the camera (14) by a predetermined distance (d) in the direction of advance of the web (10).

9. Web monitoring system according to the claims 6 and 8, wherein the control system (16) is adapted to delay, once the position of the analysis spot (46) on the printed image has been selected, the gating of the flashes of the camera (14) by a delay time (T_{d}) that corresponds to the time in which the web (10) advances by said predetermined distance (d).

10. Web monitoring system according to any of the preceding claims, wherein the control system (16) is adapted to fade-in a target mark (50) that indicates the position of the analysis spot (46) for the spectrometer into the image captured by the camera (14).

11. Web monitoring system according to claim 7, comprising a light source that projects onto the web a mark (48) that indicates the position of an analysis spot (46) relative to the printed image (38).

## Revendications

1. Système d'observation de bande pour des machines à imprimer rotatives, comportant un appareil de prise de vues (14) qui est mobile dans une direction transversale au-dessus d'une bande (10) imprimée dans la machine à imprimer et qui peut être commandé par des moyens de commande (16) de telle sorte qu'il capture une partie de l'image imprimée pendant la production, de manière synchronisée avec la répétition de l'image imprimée, et un écran (18) pour reproduire la partie de l'image imprimée capturée par l'appareil de prise de vues (14) pendant la production, **caractérisé par** un spectromètre (22) dirigé vers la bande (10) et mobile avec l'appareil de prise de vues.

2. Système d'observation de bande selon la revendication 1, comportant une source de lumière de flash (34) pour le spectromètre (22).

3. Système d'observation de bande selon la revendication 2, dans lequel le spectromètre comporte une lentille d'objectif (24) qui est reliée à la source de lumière de flash (34) et à une partie d'analyse (36) par l'intermédiaire de fibres optiques (26, 30, 32).

4. Système d'observation de bande selon la revendication 2 ou 3, dans lequel le spectromètre (22) est déclenché par les flashs de la source de lumière de flash (34).

5. Système d'observation de bande selon la revendication 4, dans lequel une source de lumière de flash supplémentaire est couplée à l'appareil de prise de vues (14) et les moyens de commande (16) sont conçus de manière à activer les deux sources de lumière de flash à la même fréquence et avec une position de phase fixe.

6. Système d'observation de bande selon la revendication 5, dans lequel les moyens de commande (16) sont conçus de manière à activer les deux sources de lumièvre de flash de manière synchronisée de telle sorte qu'elles génèrent chacune simultanément des flashes.

7. Système d'observation de bande selon l'une des revendications précédentes, dans lequel un spot d'analyse (46) sur la bande (10), auquel le spectromètre (22) est sensible, se situe à l'intérieur d'un champ de vision de l'appareil de prise de vues (14).

8. Système d'observation de bande selon la revendication 5 ou 6, dans lequel un spot d'analyse (46) sur la bande (10), auquel le spectromètre (22) est sensible, est décalé dans la direction de déplacement de la bande (10) d'une distance prédéfinie (d) par rapport au champ de vision de l'appareil de prise de vues (14).

9. Système d'observation de bande selon les revendications 6 et 8, dans lequel les moyens de commande (16) sont conçus de manière à, après avoir sélectionné la position du spot d'analyse (46) sur l'image imprimée, retarder la cadence des flashes de l'appareil de prise de vues (14) d'un temps de retard (T_{d}) qui correspond au temps pendant lequel la bande (10) se déplace de la distance (d) prédéfinie.

10. Système d'observation de bande selon l'une des revendications précédentes, dans lequel les moyens de commande (16) sont conçus de manière à afficher un repère de visée (50) indiquant la position d'un spot d'analyse (46) pour le spectromètre, dans l'image capturée par l'appareil de prise de vues (14).

11. Système d'observation de bande selon la revendication 7, comportant une source de lumière qui projette sur la bande un marquage (48) indiquant la position d'un spot d'analyse (46) par rapport à l'image imprimée (38).
